# EUROPÄISCHE PATENTSCHRIFT

(11) **EP 2 287 584 B1**
(45) Veröffentlichungstag und Bekanntmachung des Hinweises auf die Patenterteilung: **28.01.2015**
(21) Anmeldenummer: 10173413.5
(22) Anmeldetag: 19.08.2010
(51) Int. Cl.: G01K 7/32, G01K 11/26

(54) **Messsystem zur drahtlosen positionsunabhängigen Messung der Temperatur eines Messobjekts**
Measuring system for wireless position-independent measuring of the temperature of an object to be measured
Système de mesure pour la mesure sans fil indépendante de la position de la température d'un objet de mesure

(30) Priorität: 19.08.2009 DE 102009028664; 23.11.2009 DE 102009056060
(43) Veröffentlichungstag der Anmeldung: 23.02.2011
(73) Patentinhaber: Vectron International GmbH, 14513 Teltow (DE)
(72) Erfinder: Wall, Bert, 14469, Potsdam (DE); Grünwald, Richard, 14467, Potsdam (DE)
(74) Vertreter: Gulde & Partner

(56) Entgegenhaltungen:
- WO-A1-2006/123085
- FR-A1- 2 907 284
- US-A1- 2002 150 141

## Beschreibung

Die Erfindung betrifft ein Messsystem zur drahtlosen positionsunabhängigen Messung der Temperatur eines Messobjekts, insbesondere zur drahtlosen positionsunabhängigen Messung der Temperatur der Beladung des Ofens mit hoher Genauigkeit mittels passiver Temperaturfühler und zur drahtlosen positionsunabhängigen Messung der Temperatur von Hochspannungs-Schaltanlagen.

Der Begriff der Beladung des Ofens kann hier sehr weit gefasst werden. Anwendungsbereiche sind industrielle Prozesse, bei denen Werkstücke auf vorgegebene Mindesttemperaturen erwärmt werden müssen, oder ein bestimmtes Temperaturprofil durchlaufen müssen. Als Beispiel können hier Leiterplatten in einem Lötofen dienen. Bei dem Ofen kann es sich jedoch beispielsweise auch um ein Gargerät zum garen von Gargut handeln.

Die genaue Kenntnis der Temperatur der Beladung kann dabei zur Verkürzung der Prozesszeiten, Einsparung von Energie, Voraussage der Prozessdauer, Reduzierung der Wärmebelastung und Optimierung der Temperaturprozesse genutzt werden.

Die Verwendung drahtloser Temperaturfühler mit innerhalb des Ofenraumes positionsunabhängigem Messergebnis erlaubt es daher die Temperatur der Beladung des Ofens, die sich im Allgemeinen bei nicht statischen Wärmeprozessen durch hohe Wärmekapazität der Beladung, oder durch geringe Wärmeleitfähigkeit der Beladung von der Temperatur der Atmosphäre innerhalb des Prozessraumes des Ofens abweicht, zu messen.

Die Messung des Temperaturprofils von Umspannwerks-Einrichtungen (z. B. Schaltanlagen) kann wertvolle Informationen über den Betriebszustand von wertvollem Equipment liefern. Es ist sehr vorteilhaft, kontinuierlich und in Echtzeit über den thermischen Zustand elektrischer Anlagen informiert zu sein und dadurch den zunehmenden Trend zum Smart Grid, zu mehr Systemzuverlässigkeit und zur zentralen Überwachung großer Bereiche zu unterstützen.

Schaltanlagen, insbesondere Leistungsschalter, als wichtige Elemente von Systemen zur Verteilung elektrischer Energie, von Transformatoren und weiteren Übertragungs- und Verteilungseinrichten unterliegen einem Ausfallrisiko, weswegen sie genau überwacht und kontrolliert werden. Wachsende Leistungen beanspruchen die Schaltanlagen stark und lassen die Temperaturen der Schalteinrichtungen ansteigen, was wiederum die metallischen Kontakte ebenso wie die Isolation stark verschleißen lässt. Als Folge davon wächst die Gefahr, dass es zu Kurzschlüssen kommt oder der Kontaktwiderstand ansteigt. Bleibt dies unentdeckt, kann es zu Systemausfällen oder sogar zu Explosionen von Schaltvorrichtungen kommen. Besonders relevant ist dieses Problem in Schwellenländern wie Indien oder China, in denen der stark steigende Energiebedarf die Möglichkeiten der bestehenden Energieversorgungs-Infrastruktur extrem ausreizt. Mit der SAW-Technik können passive, also ohne Batterien oder Energy Harvesting auskommende, drahtlos abfragbare Temperaturmess-Lösungen realisiert werden, die sich ideal für Hochspannungs-Starkstrom-Schaltanlagen eignen.

### Stand der Technik

Zu den bekannten technischen Lösungen der Temperaturmessung der Beladung von Öfen zählen Temperaturmesssysteme bei denen die Temperaturfühler mit einem Kabel versehen sind, die mit der Auswerteelektronik des Ofens gekoppelt sind. Die Handhabung der Temperaturfühler mit Kabelanschluss für den Bediener sehr umständlich. Außerdem besteht die Gefahr, dass die Kabelanschlüsse bei höheren Temperaturen leicht beschädigt werden.

Weiterhin sind drahtlose Temperaturfühler bekannt, die über eine aktive Funkverbindung mit der Auswerteelektronik des Ofens kommunizieren. Diese Lösung ist für einen Temperaturbereich bis 125°C gut geeignet. Bei höheren Temperaturen gibt es erhebliche Probleme mit der aktiven Elektronik des Temperaturfühlers und der Energiequelle. Nachteilig bei dieser Lösung ist weiterhin, dass bei der Verwendung einer Batterie als Energiequelle im Prozess der Ladezustand der Batterie überprüft werden muss. Bei Ofentemperaturen oberhalb 125°C sind Lösungen bekannt, bei denen die aktive Elektronik und die Energiequelle thermisch isoliert werden. Damit kann jedoch nur für einen begrenzten Zeitraum die Funktion des Temperaturmesssystems garantiert werden. Sie sind nicht für einen kontinuierlichen Einsatz geeignet. Außerdem sind diese Lösungen wegen ihrer Größe in vielen Fällen nicht einsetzbar.

Eine weitere bekannte Lösung ist die Messung der Temperatur der Ladung des Ofens über Infrarotstrahlung. Hier ist eine verlässliche Messung in Abhängigkeit von der Oberflächenbeschaffenheit der Beladung des Ofens nicht immer gegeben. Außerdem lässt sich über Infrarotsensoren halt nur die Temperatur der Oberfläche der Beladung des Ofens messen. Messungen des Profils der Temperatur der Beladung des Ofens von der Oberfläche ins Innere der Beladung sind nicht möglich.

Es sind auch Lösungen zur passiven drahtlosen Messung im Ofen bekannt. In der DE 10 2004 047 758 A1 wird eine Temperatursensorvorrichtung zur Messung der Innentemperatur in Gargut vorgeschlagen. Diese Lösung arbeitet mit der mit der Frequenzabhängigkeit der Speicherung von Schwingungsenergie von mindestens 2 Energiespeichern (Resonatoren). Die Differenz der Frequenzabhängigkeit der Speicherung der Schwingungsenergie wird jedoch nicht ausgewertet. Damit ist die Genauigkeit der Messung stark von der Ausgestaltung des Übertragungsweges des Abfragesignals abhängig. Das Messergebnis ist somit positionsabhängig.

In der DE 10 2005 015 028 B4 wird ein Verfahren zur Messung der Temperatur in einem Haushaltsgerät vorgeschlagen. Bei dem darin beschriebenen Verfahren wird ebenfalls die Temperaturabhängigkeit der Frequenz eines Oberflächenwellenbauelementes zur Temperaturmessung benutzt. Nachteilig bei dieser Lösung ist ebenfalls die bereits erwähnte Positionsabhängigkeit des Messergebnisses.

EP 1 882 169 B1 offenbart eine Vorrichtung zur Messung eines Drehmoments mit Resonanzelementen, deren Resonanzfrequenz sowohl vom Drehmoment als auch von der Temperatur abhängt. Um das Drehmoment mit hoher Genauigkeit zu bestimmen, muss der Einfluss der Temperatur eliminiert werden, wodurch eine zusätzliche Temperaturmessung notwendig ist. Für die Temperaturmessung durch Messung der Differenz der Frequenz von 3 Resonanzen müssen die zugehörigen Resonatoren einen unterschiedlichen Temperaturgang aufweisen. Um dies zu erreichen müssen sie sich in Ihrem Aufbau und nicht nur in der Frequenz unterscheiden. Dies wird durch die Verwendung eines anderen Schnittes des Substratmaterials bzw. durch Variation der Ausbreitungsrichtung innerhalb eines Schnittes erreicht. So wird in EP 1 882 169 B1 ein 34° Quarzschnitt und für die Resonanzen 2 und 3 eine Ausbreitungsrichtung von -45° bzw. 0 bis 30° verwendet. Dies führt dazu, dass sich das Verhältnis der dynamischen Induktivität und der dynamischen Kapazität der Resonatoren bei gleicher Resonanzfrequenz und unverändertem Resonatordesign signifikant ändert.

In der DE 10 2007 020 176 A1 wird ein Messsystem zur Messung der Temperatur in Durchlauföfen vorgeschlagen. Dabei werden zur Sicherung der Funkübertragung im Ofenraum mehrere Abfrageantennen verwendet. Auch bei dieser Lösung wird aus der temperaturabhängigen Eigenfrequenz eines Oberflächenwellenbauelementes die Temperatur bestimmt. Nachteilig ist hier ebenfalls die bereits oben erwähnte Abhängigkeit der Genauigkeit der Messung von der Ausgestaltung des Übertragungsweges.

In Buff et al., IEEE Ultasonics Symposiums, 1996, Seite 343 bis 346, wurde auf die Abhängigkeit des Messergebnisses bei der drahtlosen passiven Abfrage von mit Oberflächenwellen arbeitenden Temperaturfühlern vom Abstand der Abfrageantenne zur Sensorantenne hingewiesen. Als Lösung zur Erhöhung der Messgenauigkeit wurde die Messung der Differenzfrequenz zweier Oberflächenwellenbauelemente mit unterschiedlichem Temperaturgang vorgestellt. Ein Parameter wurde eingeführt, der die Verbesserung der Messgenauigkeit beschreibt. Auf die Eigenschaften, die Oberflächenwellenbauelemente haben müssen, um eine starke Verbesserung der Messgenauigkeit zu erreichen, wurde nicht eingegangen.

In WO 03/081195 A1 wird ein mit Oberflächenwellenbauelementen arbeitender Drucksensor vorgestellt. Der Sensor nutzt die Differenzfrequenz dreier Oberflächenwellenresonatoren zur Druckbestimmung. Auf die Parameter, die beim Entwurf der Oberflächenwellenresonatoren berücksichtigt werden müssen um eine möglichst geringe Fehler bei der drahtlosen Abfrage des Sensors bei variierenden Parametern der Übertragungsweges zu erreichen, wird nicht eingegangen.

Bei der drahtlosen Abfrage von passiven Temperaturfühlern im Ofenraum ist die Reduzierung der Messfehler durch Änderungen der Eigenschaften des Übertragungsweges des Abfragesignals besonders kritisch. Es existiert kein Freifeld, in dem sich das Abfragesignal ungestört zwischen Abfrageantenne und Fühlerantenne ausbreiten kann. Nahfeldeffekte, verursacht durch die Abfrageantenne, die Begrenzung des Ofenraumes und die Beladung des Ofens beeinflussen das System Fühlerantenne - Resonator. Die Resonanzfrequenz des Resonators, die nur von der Temperatur des Resonators abhängig sein sollte, wird verändert. Es entstehen Messfehler. Ein von der Position des Temperaturfühlers im Ofenraum unabhängiges Messergebnis wird nicht erreicht.

Bei Hochspannungs-Starkstrom-Schaltanlagen wird die thermische Verfassung von Anlagen zur Übertragung und Verteilung elektrischer Energie bisher üblicherweise in regelmäßigen Zeitabständen, d. h. nur wenige Male pro Jahr, mit Wärmebildkameras ermittelt.

Konventionelle Methoden zur Temperaturüberwachung von Schaltanlagen, wie z.B. aus der WO 2008/052813 A1 bekannt, sind besonders bei Hochspannungs-Schaltanlagen durch den erforderlichen Isolationsaufwand teuer und lassen sich nur schwer in bestehende Anlagen nachrüsten.

Mit Temperaturmesssystemen, die auf passiven drahtlosen Resonatoren basieren, werden vor allem Temperaturen von Schaltkontakten und Sammelschienen überwacht. Bei der Installation von Temperatursensoren auf beweglichen Schaltkontakten ergeben sich durch die beim Schaltvorgang stattfindende Positionsänderung des Sensors Änderungen der Eigenschaften des Übertragungsweges des HF-Abfragesignals mit den bereits bei Ofenanwendungen beschriebenen Auswirkungen auf die Messgenauigkeit. Diese Fehler können durch eine Kalibrierungsprozedur in der Anlage in beiden Schaltstellungen vermieden werden. Dies ist jedoch gerade bei der Nachrüstung von Schaltanlagen aufwendig.

Weitere Beispiele sind in FR 2 907 284 und in US 2002/015 0141 A1 zu finden.

### Aufgabenstellung

Der Erfindung liegt die Aufgabe zu Grunde ein Messsystem zu schaffen, das drahtlos, positionsunabhängig und kontinuierlich die Temperatur der Beladung eines Ofens innerhalb des Ofenraumes oder die Temperatur von kritischen Komponenten wie Sammelschienen und Schaltkontakten von Schaltanlagen mit geringem Fehler misst.

### Beschreibung der Erfindung

Die Aufgabenstellung wird erfindungsgemäß durch die Merkmale des Patentanspruches 1 gelöst. Vorteilhafte Ausgestaltungen und Weiterbildungen der Erfindung können den Unteransprüchen entnommen werden.

Die Erfindung offenbart ein System zur drahtlosen Messung der Temperatur eines Messobjekts mit mindestens einer Abfrageeinheit, mindestens einer Abfrageantenne, die in der Nähe des Messobjekts positionierbar ist, mindestens einem passiv betriebener Temperaturfühler mit einer Fühlerantenne und mit mindestens einem als Resonator ausgebildeten Temperatursensor, wobei der Temperaturfühler in der Nähe des Messobjekts positionierbar ist, und mindestens einer Auswerteeinheit, wobei der Temperatursensor mindestens ein erstes Resonanzelement und ein zweites Resonanzelement aufweist, und wobei die Auswerteeinheit ausgebildet ist, die Temperatur des Messobjekts aus der Differenz der Resonanzfrequenz des ersten Resonanzelements und der Resonanzfrequenz des zweiten Resonanzelements zu bestimmen, wobei das erste Resonanzelement und das zweite Resonanzelement derart ausgebildet sind, dass sich bei 20 °C der dynamische Widerstand, die dynamische Induktivität und die dynamische Kapazität des ersten Resonanzelements um jeweils weniger als 20 % vom dynamischen Widerstand, der dynamischen Induktivität und der dynamischen Kapazität des zweiten Resonanzelements unterscheiden.

Von der Abfrageeinheit werden HF-Signale erzeugt und über die mindestens eine Abfrageantenne an den drahtlosen passiven Temperaturfühler gesendet. Als HF-Signal im Sinne der vorliegenden Anmeldung werden vorzugsweise Signale mit einer Frequenz zwischen 30 MHz und 1500 MHz, bevorzugter mit einer Frequenz zwischen 100 MHz und 1000 MHz verstanden. Die HF-Signale werden über die Fühlerantenne des Temperaturfühlers an den Temperatursensor weiter geleitet. Der Temperatursensor enthält mindestens 2 Resonanzelemente, die mit der Fühlerantenne elektrisch verbunden sind. Teile des Abfragesignals werden in den Resonanzelementen zwischengespeichert und über die Fühlerantenne wieder abgestrahlt. Nach Abschalten des Abfragesignals können diese gespeicherten Teile mit Hilfe der Abfrageeinheit empfangen und in der Abfrageeinheit ausgewertet werden. Bei der Abfrageprozedur wird die Resonanzfrequenz der Resonanzelemente bestimmt. Die Temperatur wird dabei aus der Differenz der Resonanzfrequenzen der Resonanzelemente bestimmt. Vorzugsweise ist die mindestens eine Abfrageantenne in der Nähe des Messobjekts positioniert. Vorzugsweise ist die mindestens eine Abfrageantenne in einer Entfernung von weniger als 1 m, bevorzugter weniger als 50 cm, bevorzugter weniger als 40 cm, bevorzugter weniger als 30 cm und noch bevorzugter weniger als 20 cm vom Messobjekt entfernt. Besonders bevorzugt befindet sich das Messobjekt innerhalb eines abgeschlossenen Raums (Ofen, Schaltkammer etc.) und die mindestens eine Abfrageantenne ist vorzugsweise innerhalb des abgeschlossenen Raums positioniert. Vorzugsweise ist der mindestens eine Temperaturfühler (mit der Fühlerantenne) in der Nähe des Messobjekts positioniert. Vorzugsweise ist der mindestens eine Temperaturfühler in einer Entfernung von weniger als 10 cm, bevorzugter weniger als 5 cm, bevorzugter weniger als 4 cm, bevorzugter weniger als 1 cm und noch bevorzugter weniger als 0,5 cm vom Messobjekt entfernt. Vorzugsweise ist der mindestens eine Temperaturfühler direkt auf dem Messobjekts angeordnet, steht also vorzugsweise in direktem Kontakt mit dem Messobjekt.

Vorzugsweise ist das erste Resonanzelement in einer Entfernung von weniger als 10 mm, bevorzugter weniger als 5 mm, bevorzugter weniger als 3 mm, bevorzugter weniger als 2 mm und noch bevorzugter weniger als 1 mm vom zweiten Resonanzelement entfernt. Vorzugsweise ist das erste Resonanzelement unmittelbar neben dem zweiten Resonanzelement angeordnet.

Gemäß einem weiteren Aspekt der Erfindung wird ein Messsystem in einem Ofen mit einer oder mehreren Abfrageeinheiten außerhalb des Ofenraumes, eine oder mehrere im Ofenraum befindliche Abfrageantennen und mindestens einem passiv betriebenen frei beweglichen Temperaturfühler mit Fühlerantenne mit mindestens einem als Resonator ausgebildeten Temperatursensor zur drahtlosen Messung der Temperatur des Beladung des Ofenraumes offenbart.

Gemäß einem weiteren Aspekt der Erfindung wird ein Messsystem in einer Schaltanlage mit einer Abfrageeinheit, die sich in sicherer Entfernung zur zu schaltenden Spannung z.B. in einer separaten Steuerkammer der Schaltanlage befindet, einer oder mehrerer in der Leistungsschaltkammer, in der Sammelschienenkammer und der Kabelkammer befindlichen Abfrageantennen und einem oder mehreren auf die stromführenden Schaltkontakte, Sammelschienen und Leistungskabel montierten Temperaturfühler mit Fühlerantenne mit mindestens einem als Resonator ausgebildetem Temperatursensor zur drahtlosen Messung der Temperatur der stromführenden Teile offenbart.

Erfindungsgemäß wird vorgeschlagen, dass der Temperatursensor mindestens 2 Resonanzen mit unterschiedlichem Temperaturkoeffizienten der Frequenz aufweist und die Resonanzelemente so auszulegen sind, dass sich deren elektrische Ersatzschaltbilder nur geringfügig voneinander unterscheiden. Dabei wird die Temperatur nicht über die Frequenzlage der einzelnen Resonanzen, sondern über die Differenz der Frequenz der Resonanzen bestimmt. Die Frequenz der einzelnen Resonanzen kann jetzt durch Einflüsse des Übertragungsweges der Funkabfrage (Antennennahfeldeffekte) oder durch Fehlanpassungen zwischen Fühlerantenne und Temperatursensor verändert werden. Die Änderung ist jedoch wegen des annähernd identischen elektrischen Ersatzschaltbildes der Resonanzelemente annähernd identisch. Die Differenzfrequenz der einzelnen Resonanzen wird damit nicht beeinflusst. Dass Messsignal ist stabil.

Die Resonanzelemente sind dabei so auszulegen, dass deren Resonanzfrequenz im Arbeitstemperaturbereich einen Mindestabstand ausweist, der es gestattet die Resonanzen den Resonanzelementen eineindeutig zuzuordnen. Um aus der Differenz der Resonanzfrequenz der Resonanzelemente die Temperatur eindeutig bestimmen zu können müssen sich die Temperaturkoeffizienten der Resonanzfrequenz der Resonanzelemente voneinander unterscheiden. Um eine eindeutige Zuordnung der Differenzfrequenz zur Temperatur zu erhalten darf die Ableitung der Differenzfrequenz nach der Temperatur keine Nullstelle aufweisen.

Besonders vorteilhaft ist es wenn die Differenz der Resonanzfrequenzen über der Temperatur linear steigend oder linear fallend ausgebildet ist. Dies ermöglicht es dass Messsystem so auszulegen, dass der Messfehler im Arbeitstemperaturbereich möglichst konstant ist.

Die erreichbare Messgenauigkeit des Systems wird von der Güte der Resonanzelemente mit bestimmt. Daher ist es besonders vorteilhaft die Resonanzelemente als Oberflächenwellenresonatoren oder Volumenwellen-Resonatoren auszulegen. Diese mit akustischen Wellen arbeitenden Resonatoren weisen eine hohe Güte bei geringer Wärmekapazität und geringen Herstellkosten auf.

Eine besonders vorteilhafte Lösung ist die Auslegung der Resonanzelemente als Oberflächenwellenresonatoren. Bei dieser Lösung können die Resonanzelemente besonders klein und mit besonders geringer Wärmekapazität ausgelegt werden. In diesem Fall kann es vorteilhaft sein, die Resonanzelemente auf einem gemeinsamen Chip auszulegen. Damit wird der Aufbau der Resonatoren vereinfacht. Es kann jedoch auch vorteilhaft sein, die Resonanzelemente auf unterschiedlichen Chips auszulegen. Damit wird der Einsatz unterschiedlicher Waferschnitte bzw. Wafermaterialien zur Prozessierung der Resonanzelemente ermöglicht. Dies kann Vorteile bei der Auslegung des Messsystems und bei den Anforderungen an die Prozessgenauigkeit bei der Prozessierung der Resonanzelemente haben.

Besonders vorteilhaft ist es die Resonanzelemente so auszulegen, dass sie innerhalb eines ISM-Bandes liegen. Dies macht es möglich, das Messsystem in Öfen oder Schaltanlagen zu integrieren, die nur eine geringe Schirmung der zur Abfrage der Temperaturfühler verwendeten Funkfrequenzen aufweisen.

Besonders vorteilhaft ist es das Messsystem für den Frequenzbereich des ISM-Bandes bei 433,92 MHz auszulegen. Die Größe der Resonatoren nimmt im Allgemeinen mit zunehmender Resonanzfrequenz ab. Andererseits steigen die Anforderungen an die Prozessstabilität mit steigender Frequenz und die Güte der Resonanzelemente nimmt ab. Der Frequenzbereich bei 433,92 MHz stellt einen besonders günstigen Kompromiss dar.

Besonders vorteilhaft ist ebenfalls das Messsystem für den Frequenzbereich des ISM-Bandes bei 915 MHz auszulegen. Hier sind noch relativ hohe Güten für die Resonanzelemente bei besonders kleiner Bauform der Resonatoren erreichbar.

Eine besonders vorteilhafte Lösung ist es die Fühlerantenne in den Temperatursensor zu integrieren. Dies erlaubt es den Temperaturfühler besonders klein auszulegen. Da diese Lösung im Allgemeinen mit höheren Verlusten in der Fühlerantenne verbunden ist, ist diese Lösung für Anwendungen mit besonders geringen Anforderungen an die Reichweite besonders vorteilhaft.

Eine Reihe von Anwendungsfällen, wie z.B. die Messung des Temperaturprofils von Gargut in einem Gargerät von der Oberfläche des Garguts ins innere des Garguts, bei denen für die Messung des Temperaturprofils mindestens zwei Temperatursensoren im Temperaturfühler enthalten sein müssen. Weiterhin kann man mit der Integration weiterer Temperatursensoren in den Temperaturfühler und Auswertung des Messergebnisses aller Temperatursensoren, die Genauigkeit der Messung weiter erhöhen. Daher stellt ein Temperaturfühler mit mehr als einem Temperatursensor eine besonders vorteilhafte Ausgestaltung der Erfindung dar. Bei dieser Ausgestaltung der Erfindung müssen die Resonanzelemente der einzelnen Temperatursensoren so ausgelegt werden, dass deren Resonanzfrequenz im Arbeitstemperaturbereich einen Mindestabstand ausweist, der es gestattet die Resonanzen den Resonanzelementen eineindeutig zuzuordnen.

In anderen Anwendungsfällen, wie z.B. der Messung der Temperatur einer Leiterplatte in einem Durchlaufofen, kann es von Vorteil sein, die Temperatur an verschiedenen Stellen der Ladung des Ofens zu messen, oder die Temperatur verschiedener Teile der Ladung des Ofens zu messen. Ein Messsystem mit mehr als einem Temperaturfühler stellt eine besonders vorteilhafte Ausführung der Erfindung dar.

Das erfindungsgemäße System zur drahtlosen Messung der Temperatur der Beladung in einem Ofen, weist auf: eine Abfrageeinheit, eine oder mehrere Abfrageantennen, die innerhalb des Ofenraums positionierbar sind, einen passiv betriebener Temperaturfühler mit einer Fühlerantenne und mit mindestens einem als Resonator ausgebildeten Temperatursensor auf, wobei der Temperaturfühler innerhalb des Ofenraums positionierbar ist, und eine Auswerteeinheit, wobei der Temperatursensor mindestens ein erstes Resonanzelement und ein zweites Resonanzelement aufweist, wobei das erste Resonanzelements und das zweite Resonanzelement derart ausgebildet sind, dass sich bei 20°C die dynamische Kapazität des ersten Resonanzelements um jeweils weniger als 50% (bevorzugter 20%, noch bevorzugter 15%) von der dynamischen Kapazität des zweiten Resonanzelements unterscheiden. Weiterhin unterscheidet sich die dynamische Induktivität des ersten Resonanzelements um jeweils weniger als 50% (bevorzugter 20%, noch bevorzugter 15%) von der dynamischen Induktivität des zweiten Resonanzelements. Weiterhin unterscheidet sich der dynamische Widerstand des ersten Resonanzelements um jeweils weniger als 50% (bevorzugter 20%, noch bevorzugter 15%) vom dynamischen Widerstand des zweiten Resonanzelements.

Die Parameter dynamische Kapazität, dynamischer Widerstand und dynamische Induktivität sind beispielsweise in Bernd Neubig und Wolfgang Briese, "Das Grosse Quarzkochbuch", Franzis-Verlag, 1997, näher definiert. Der dynamische Widerstand wird häufig auch als dynamischer Verlustwiderstand oder als Resonanzwiderstand bezeichnet.

Vorzugsweise ist die Auswerteeinheit ausgebildet, die Temperatur der Beladung des Ofens aus der Differenz der Resonanzfrequenz des ersten Resonanzelements und der Resonanzfrequenz des zweiten Resonanzelements zu bestimmen. Vorzugsweise unterscheidet sich die dynamische Kapazität des ersten Resonanzelements um jeweils weniger als 10% (bevorzugter 7%, noch bevorzugter 4%) von der dynamischen Kapazität des zweiten Resonanzelements. Vorzugsweise unterscheidet sich die dynamische Induktivität des ersten Resonanzelements um jeweils weniger als 10% (bevorzugter 7%, noch bevorzugter 4%) von der dynamischen Induktivität des zweiten Resonanzelements. Vorzugsweise unterscheidet sich der dynamische Widerstand des ersten Resonanzelements um jeweils weniger als 10% (bevorzugter 7%, noch bevorzugter 4%) vom dynamischen Widerstand des zweiten Resonanzelements.

Vorzugsweise unterscheidet sich der dynamische Widerstand des ersten Resonanzelements vom dynamischen Widerstand des zweiten Resonanzelements. Vorzugsweise unterscheidet sich die dynamische Induktivität des ersten Resonanzelements von der die dynamische Induktivität des zweiten Resonanzelements. Vorzugsweise unterscheidet sich die dynamische Kapazität des ersten Resonanzelements von der die dynamische Kapazität des zweiten Resonanzelements. Mindestens ein Parameter von dynamischem Widerstand, dynamischer Induktivität und dynamischer Kapazität des ersten Resonanzelements ist vom jeweiligen Parameter des zweiten Resonanzelements unterschiedlich.

Vorzugsweise unterscheidet sich das Produkt aus der dynamischen Induktivität und der dynamischen Kapazität des ersten Resonanzelements im Temperaturbereich zwischen 0°C und 250°C um mindestens 0,01 % (bevorzugter 0,05 %, noch bevorzugter 0,1%) vom Produkt aus der dynamischen Induktivität und der dynamischen Kapazität des zweiten Resonanzelements.

Vorzugsweise unterscheidet sich die Resonanzfrequenz des ersten Resonanzelements von der Resonanzfrequenz des zweiten Resonanzelements im (vorzugsweise gesamten) Bereich 20°C bis 200°C. Vorzugsweise ist die Differenz der Resonanzfrequenzen der Resonanzelemente im Bereich 20°C bis 200°C stetig steigend oder stetig fallend. Vorzugsweise ist die Differenz der Resonanzfrequenzen der Resonanzelemente im Bereich 20°C bis 200°C linear steigend oder linear fallend. Vorzugsweise ist der Betrag der Ableitung der Resonanzfrequenz nach der Temperatur des ersten Resonanzelements im gesamten Bereich 20°C bis 200°C größer als der Betrag der Ableitung der Resonanzfrequenz nach der Temperatur des zweiten Resonanzelements ist. Alternativ ist der Betrag der Ableitung der Resonanzfrequenz nach der Temperatur des ersten Resonanzelements vorzugsweise im gesamten Bereich 20°C bis 200°C kleiner als der Betrag der Ableitung der Resonanzfrequenz nach der Temperatur des zweiten Resonanzelements.

Vorzugsweise sind die Resonanzelemente als Oberflächenwellen-Resonatoren oder als Volumenwellen-Resonatoren ausgebildet. Vorzugsweise sind die Resonanzelemente auf einem Chip oder auf unterschiedlichen Chips ausgebildet. Vorzugsweise sind die Resonanzfrequenzen der Resonanzelemente im Arbeitstemperaturbereich in einem ISM-Band ausgebildet. Vorzugsweise sind die Resonanzfrequenzen der Resonanzelemente im ISM-Band bei 433,92 MHz oder im ISM-Band bei 915 MHz ausgebildet. Vorzugsweise ist die Fühlerantenne in den Temperatursensor integriert oder separat ausgeführt. Vorzugsweise ist mehr als ein Temperatursensor innerhalb des Temperaturfühlers angeordnet. Vorzugsweise weist das erfindungsgemäße System mehr als einen Temperaturfühler auf. Vorzugsweise ist der Temperaturfühler an der Beladung des Ofens dauerhaft fixierbar. Vorzugsweise ist der Temperaturfühler an der Beladung des Ofens reversibel fixierbar.

Die Erfindung wird nachstehend anhand von Ausführungsbeispielen näher erläutert.

Es zeigen:
- Fig. 1:: Ofen mit Messsystem zur drahtlosen passiven Messung der Temperatur der Beladung des Ofens,
- Fig. 2:: Elektrisches Ersatzschaltbild des als Temperatursensor eingesetzten Oberflächenwellen-Resonators eines herkömmlichen Messsystems zur drahtlosen passiven Messung der Temperatur in Haushaltsgeräten,
- Fig. 3:: Elektrisches Ersatzschaltbild eines mit akustischen Oberflächenwellen arbeitenden Sensors mit 2 Resonanzen zur Bestimmung der Temperatur über die Differenzfrequenz der Resonanzen,
- Fig. 4:: Frequenzgang des als Temperatursensor eingesetzten Oberflächenwellen-Resonators eines herkömmlichen Messsystems zur drahtlosen passiven Messung der Temperatur in Haushaltsgeräten,
- Fig. 5:: Temperaturgang zweier Resonanzelemente eines mit akustischen Oberflächenwellen arbeitenden Sensors zur Bestimmung der Temperatur über die Differenzfrequenz der Resonanzen, und
- Fig. 6:: Schaltanlage mit Messsystem zur drahtlosen passiven Messung der Temperatur der stromführenden Teile.

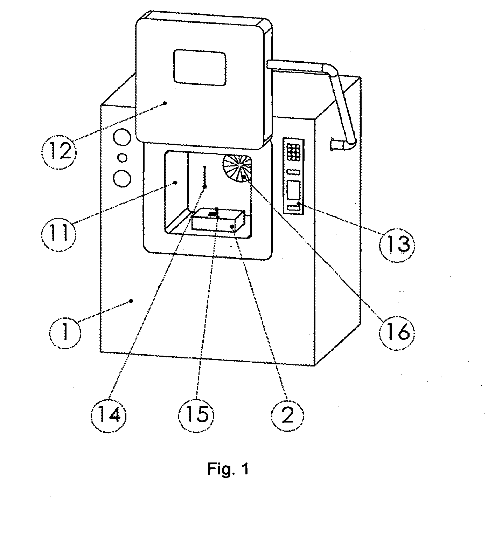

In Fig. 1 ist ein bevorzugtes Ausführungsbeispiel des erfindungsgemäßen Messsystems zur drahtlosen positionsunabhängigen Messung der Temperatur der Beladung des Ofens mit hoher Genauigkeit mittels passiver Temperaturfühler dargestellt. Der Ofen ist hier als Industrieofen **1** ausgebildet. Der Ofenraum **11** wird im Ofenbetrieb mit der Tür **12** verschlossen. Im Ofenraum des Ofens befinden sich die Abfrageantenne **14** und der drahtlose Temperaturfühler **15** des Messsystems. Weiterhin befindet sich ein Werkstück **2** als Beladung im Ofenraum des Ofens. Der drahtlose Temperaturfühler befindet sich in thermischen Kontakt mit dem Werkstück. Die Abfrageeinheit des Messsystems ist in die Steuerelektronik des Ofens **13** integriert. Der Ofenraum des Ofens hat eine Verbindung zu einem Heiz- und Luftumwälzmodul **16.** Das Heiz- und Luftumwälzmodul wird über die Steuerelektronik des Ofens so gesteuert, dass die die Temperatur des Werkstücks ein vorgegebenes Temperaturprofil durchfährt. Dabei dient die aktuelle Temperatur des Werkstücks während das Temperaturprofil gefahren wird, als Regelgröße. Die aktuelle Temperatur des Werkstücks wird drahtlos mit Hilfe des erfindungsgemäßen Messsystems gemessen. Dazu werden von der Abfrageeinheit HF-Signale erzeugt und über die Abfrageantenne 14 an den drahtlosen passiven Temperaturfühler 15 gesendet. Die HF-Signale werden über die Fühlerantenne des Temperaturfühlers 15 an den Temperatursensor weiter geleitet. Der Temperatursensor enthält mindestens 2 Resonanzelemente, die mit der Fühlerantenne elektrisch verbunden sind. Teile des Abfragesignals werden in den Resonanzelementen zwischengespeichert und über die Fühlerantenne wieder abgestrahlt. Nach Abschalten des Abfragesignals können diese gespeicherten Teile mit Hilfe der Anfrageeinheit empfangen und in der Abfrageeinheit ausgewertet werden. Bei der Abfrageprozedur wird die Resonanzfrequenz der Resonanzelemente bestimmt. Die Temperatur wird dabei aus der Differenz der Resonanzfrequenzen der Resonanzelemente bestimmt. Die Resonanzelemente sind so ausgeführt, dass sich ihre elektrischen Ersatzschaltbilder nur geringfügig unterscheiden. Damit hat die Position der Fühlerantenne im Ofenraum über die durch das Werkstück, die Begrenzung des Ofenraums und die Abfrageantenne verursachten Nahfeldeffekte, die die Impedanz der Antenne gegenüber dem Temperatursensor beeinflussen, nur noch geringen Einfluss auf die Differenz der Resonanzfrequenzen der Resonanzelemente.

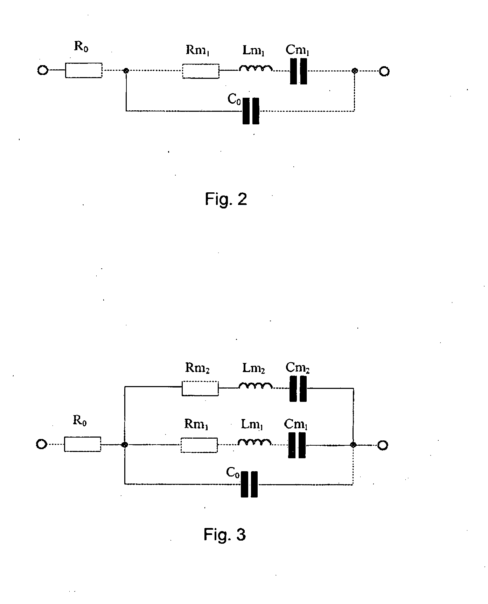

Das elektrische Ersatzschaltbild des als Temperatursensor eingesetzten Oberflächenwellen-Resonators eines herkömmlichen Messsystems zur drahtlosen passiven Messung der Temperatur in Haushaltsgeräten, ist in Fig. 2 detailliert dargestellt. Rₘ₁, Lₘ₁ und Cₘ₁ bilden den dynamischen Widerstand, die dynamische Induktivität und die dynamische Kapazität ab. C₀ steht für die statische Kapazität des Resonators. R₀ bildet den ohmschen Widerstand der Zuleitung des Resonators ab. Rₘ₁, Lₘ₁ und Cₘ₁ sind wegen der Abhängigkeit der Resonanzfrequenz des Resonators von der Temperatur ebenfalls temperaturabhängig. In herkömmlichen drahtlosen passiven Temperaturfühlern werden diese Oberflächenwellen-Resonatoren zwischen Antenne und Masse geschaltet. Der Oberflächenwellen-Resonator wird mit der Impedanz der Antenne abgeschlossen. Im Ofenraum kann die Impedanz der Antenne durch Nahfeldeffekte positionsabhängig geändert werden. Der Resonator wird verstimmt. Damit ändert sich die Resonanzfrequenz positionsabhängig. Es entsteht ein Messfehler.

Das elektrische Ersatzschaltbild eines mit akustischen Oberflächenwellen arbeitenden Sensors mit 2 Resonanzen zur Bestimmung der Temperatur über die Differenzfrequenz der Resonanzen ist in Fig. 3 dargestellt. Beide Resonanzelemente sind parallel geschaltet. Rₘ₁, Lₘ₁ und Cₘ₁ bilden den dynamischen Widerstand, die dynamische Induktivität und die dynamische Kapazität des 1. Resonanzelementes ab. Rₘ₂, Lₘ₂ und Cₘ₂ sind der dynamischen Widerstand, die dynamische Induktivität und die dynamische Kapazität des 2. Resonanzelementes. C₀ steht für die statische Kapazität der Parallelschaltung beider Resonanzelemente. R₀ bildet den ohmschen Widerstand der Zuleitung zu beiden Resonanzelementen ab. Die Resonanzfrequenz beider Resonanzelemente ist temperaturabhängig. Die Abhängigkeit der Resonanzfrequenz von der Temperatur ist jedoch unterschiedlich ausgeprägt. Daher sind sowohl Rₘ₁, Lₘ₁ und Cₘ₁ als auch Rₘ₂, Lₘ₂ und Cₘ₂ temperaturabhängig, jedoch mit unterschiedlich starker Ausprägung der Temperaturabhängigkeit. Der Sensor wird in einem drahtlosen passiven Temperaturfühler elektrisch zwischen Fühlerantenne und Masse geschaltet. Beide Resonanzelemente sind mit der gleichen Impedanz abgeschlossen. Auch hier tritt im Ofenraum durch Nahfeldeffekte positionsabhängig eine Änderung der Impedanz der Antenne auf. Beide Resonanzelemente werden in der Frequenz gezogen. Die Resonanzfrequenzen ändern sich. Die Änderung der Resonanzfrequenz hängt von den Werten der Ersatzelemente der Resonanzelemente ab. Das ziehen der Frequenz beider Resonanzelemente erfolgt entweder hin zu höheren oder hin zu geringeren Frequenzen. Wird die Temperatur aus der Differenz der Resonanzfrequenzen beider Resonanzelemente bestimmt, ist der entstehende Messfehler gegenüber einem Temperaturfühler mit nur einem Resonanzelement generell geringer. Der Messfehler tendiert gegen Null wenn sich die Ersatzelemente Rₘ₁, Lₘ₁ und Cₘ₁ des ersten Resonanzelementes und Rₘ₂, Lₘ₂ und Cₘ₂ des zweiten Ersatzelementes wie erfindungsgemäß nur geringfügig unterscheiden. Identisch können Rₘ₁, Lₘ₁ und Cₘ₁ mit Rₘ₂, Lₘ₂ und Cₘ₂ nie sein, da sich die Resonanzfrequenzen von Resonanzelement 1 und Resonanzelement 2 sonst nicht unterscheiden würden. Der unterschiedliche Temperaturgang der Resonanzelemente 1 und 2 wird hauptsächlich durch die Verwendung unterschiedlicher Kristallschnitte, oder unterschiedlicher Ausbreitungsrichtungen eines Kristallschnittes erreicht. Die damit verbundenen unterschiedlichen Materialparameter der Kristalle führen zu einem erhöhten Entwurfsaufwand um Resonanzelemente mit annähernd identischen Ersatzelementen zu entwerfen.

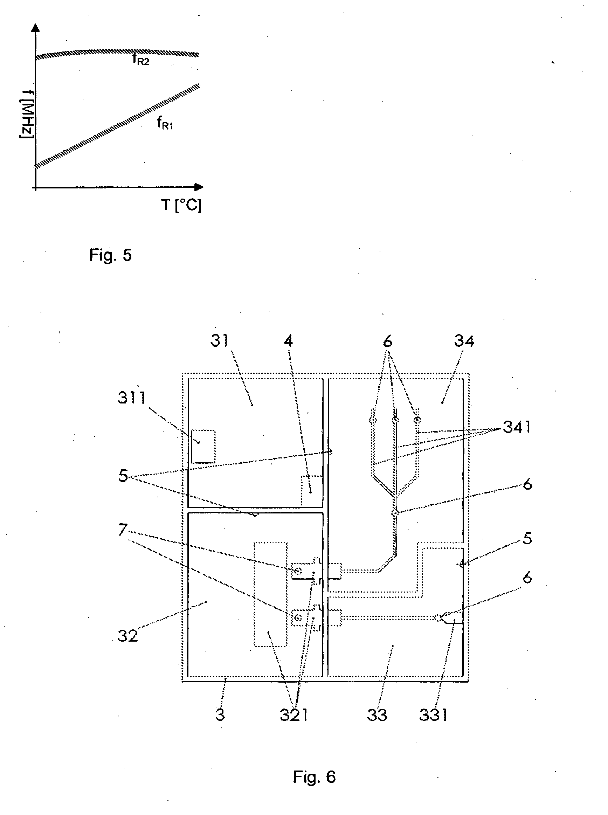

Der Temperaturgang zweier Resonanzelemente eines mit akustischen Oberflächenwellen arbeitenden Sensors zur Bestimmung der Temperatur über die Differenzfrequenz der Resonanzen ist in Fig. 5 dargestellt. Hierbei ist f_{R1} die Resonanzfrequenz eines ersten Resonanzelementes eines im drahtlosen passiven Temperaturfühler verwendeten Temperatursensors im Arbeitstemperaturbereich des Temperaturfühlers und f_{R2} die Resonanzfrequenz eines zweiten Resonanzelementes. Der Temperaturgang und die Frequenzlage beider Resonanzelemente ist so gewählt, dass die Resonanzfrequenzen beider Resonanzelemente im bei allen Temperaturen innerhalb des Arbeitstemperaturbereiches einen Mindestabstand zueinander aufweisen und eine eindeutige Zuordnung der Differenzfrequenz beider Resonanzelemente zur Temperatur des Temperatursensors möglich ist. Weiterhin wurden die Resonanzfrequenzen so gewählt, dass die Resonanzfrequenzen beider Resonanzelemente im gesamten Arbeitstemperaturbereich innerhalb des ISM-Bandes bei 433,92 MHz liegen.

In Fig. 6 ist ein Ausführungsbeispiel des erfindungsgemäßen Messsystems zur drahtlosen positionsunabhängigen Messung der Temperatur stromführender Teile in Schaltanlagen mit hoher Genauigkeit mittels passiver Temperaturfühler dargestellt. Die für das Schalten hoher Ströme und Spannungen geeignete Schaltanlage **3** ist im Ausführungsbeispiel in 4 Kammern unterteilt. Die Steuerkammer **31** enthält die Steuerelektronik **311** der Schaltanlage und ist gegenüber den in anderen Kammern auftretenden hohen Feldstärken geschirmt. Die Schaltkammer **32** enthält die Leistungsschalter **321.** Die Kabelkammer **33** enthält die Enden von Hochspannungskabeln **331,** mit denen die Schaltanlage an externe Spannungsquellen bzw. Verbraucher angeschlossen ist. Die Sammelschienenkammer **34** enthält die Sammelschienen **341.** Die Abfrageeinheit **4** des Messsystems ist in der Steuerkammer **32** untergebracht und mit Abfrageantennen **5** in der Kabelkammer **33,** der Sammelschienenkammer **34** und der Schaltkammer **32** verbunden. An kritischen Komponenten wie Kontakten der Leistungsschalter **321,** Sammelschienen **341** und Enden von Hochspannungskabeln **331** sind Temperaturfühler **6** angebracht. Die durch die Schaltanlage fließenden Stromstärken erwärmen die kritischen Komponenten an Leitungs- und Übergangswiderständen. Die aktuelle Temperatur der kritischen Komponenten wird drahtlos mit Hilfe des erfindungsgemäßen Messsystems gemessen. Dazu werden von der Abfrageeinheit **4** HF-Signale erzeugt und über die Abfrageantennen **5** an die drahtlosen passiven Temperaturfühler **6,7** gesendet. Die HF-Signale werden über die Fühlerantennen der Temperaturfühler an die Temperatursensoren weiter geleitet. Die Temperatursensoren enthalten jeweils mindestens 2 Resonanzelemente, die mit den jeweiligen Fühlerantennen elektrisch verbunden sind. Teile des Abfragesignals werden in den Resonanzelementen zwischengespeichert und über die Fühlerantennen wieder abgestrahlt. Nach Abschalten des Abfragesignals können diese gespeicherten Teile mit Hilfe der Abfrageeinheit **4** empfangen und in der Abfrageeinheit **4** ausgewertet werden. Bei der Abfrageprozedur wird die Resonanzfrequenz der Resonanzelemente bestimmt. Die Temperatur wird dabei aus der Differenz der Resonanzfrequenzen der Resonanzelemente bestimmt. Die Resonanzelemente der Temperatursensoren sind so ausgeführt, dass sich die elektrischen Ersatzschaltbilder der Resonanzelemente innerhalb eines Temperatursensors nur geringfügig unterscheiden. Damit hat die durch den Schaltvorgang veränderliche Position der Fühlerantennen der an den Leistungsschaltern **321** angebrachten Temperaturfühler **7** mit den damit verbundenen veränderten Nahfeldeffekten, die die Impedanz der Fühlerantennen gegenüber den Temperatursensoren beeinflussen, nur noch geringen Einfluss auf die Differenz der Resonanzfrequenzen der Resonanzelemente. Weiterhin können Temperaturfühler **6,7** mit vorgefertigten Kalibierdaten an unterschiedlichen Positionen in der Schaltanlage **321, 331, 341,** montiert werden. Die mit unterschiedlichen Montagepositionen verbundenen unterschiedlichen Nahfeldeffekte haben nur noch geringen Einfluss auf die Differenz der Resonanzfrequenzen der Resonanzelemente des einzelnen Temperaturfühlers **6,7** und damit auf auftretende systematische Messfehler. Dies ist besonders für die Nachrüstung von Schaltanlagen **3** mit dem Temperaturmesssystem von Bedeutung. Die Temperaturdaten werden an die Steuerung der Schaltanlage **311** übergeben und können von dort an eine überwachende Schaltzentrale übermittelt werden.

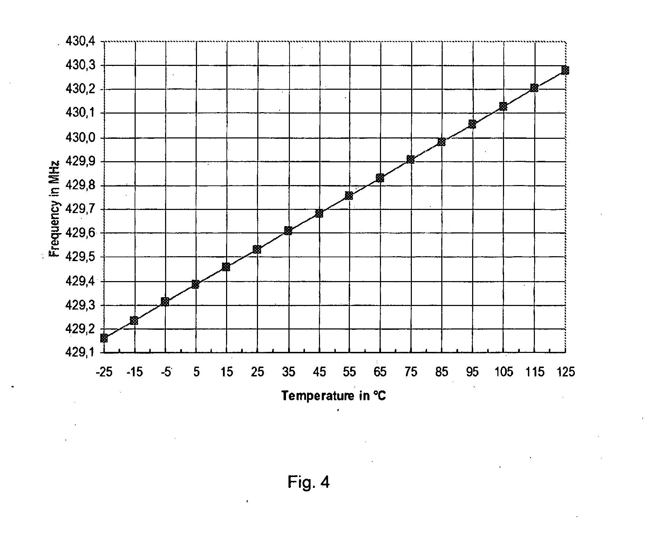

Die Ausführungen zu den Fig. 3 bis 5 gelten für die Vorrichtung der Fig. 6 in analoger Weise.

### Bezugszeichenliste

- 1: Ofen / Industrieofen
- 2: Beladung / Werkstück/ Messobjekt
- 3: Schaltanlage
- 4: Abfrageeinheit
- 5: Abfrageantenne
- 6: Temperaturfühler
- 7: Temperaturfühler
- 11: Innenraum / Ofenraum
- 12: Tür des Ofens
- 13: Steuerelektronik des Ofens
- 14: Abfrageantenne
- 15: Temperaturfühler
- 16: Heiz- und Luftumwälzmodul
- 31: Steuerkammer
- 32: Schaltkammer
- 33: Kabelkammer
- 34: Sammelschienenkammer
- 311: Steuerelektronik
- 321: Leistungsschalter
- 331: Hochspannungskabel
- 341: Sammelschiene

## Patentansprüche

1. System zur drahtlosen Messung der Temperatur eines Messobjekts (2, 321, 331, 341), aufweisend:
- mindestens eine Abfrageeinheit (4, 13) für die Erzeugung von HF-Signalen,
- mindestens eine Abfrageantenne (5, 14) für das Senden von HF-Signalen, die in der Nähe des Messobjekts (2, 321, 331, 341) positionierbar ist,
- mindestens ein passiv betriebener Temperaturfühler (6, 7, 15) mit einer Fühlerantenne und mit mindestens einem als Resonator ausgebildeten Temperatursensor, wobei die Fühlerantenne ausgebildet ist, die HF-Signale an den Temperatursensor weiterzuleiten, wobei der Temperaturfühler (6, 7, 15) in der Nähe des Messobjekts (2, 321, 331, 341) positionierbar ist, und
- eine Auswerteeinheit,
wobei der Temperatursensor mindestens ein erstes Resonanzelement und ein zweites Resonanzelement aufweist, wobei die Resonanzelemente als Oberflächenwellen-Resonatoren oder als Volumenwellen-Resonatoren ausgebildet sind, und
wobei die Auswerteeinheit ausgebildet ist, die Temperatur des Messobjekts (2, 321, 331, 341) aus der Differenz der Resonanzfrequenz des ersten Resonanzelements und der Resonanzfrequenz des zweiten Resonanzelements zu bestimmen,
**dadurch gekennzeichnet, dass**
das erste Resonanzelement und das zweite Resonanzelement derart ausgebildet sind, dass sich bei 20 °C der dynamische Widerstand, die dynamische Induktivität und die dynamische Kapazität des ersten Resonanzelements um jeweils weniger als 20 % vom dynamischen Widerstand, der dynamischen Induktivität und der dynamischen Kapazität des zweiten Resonanzelements unterscheiden.

2. System nach Anspruch 1 zur drahtlosen Messung der Temperatur der Beladung (2) in einem Ofen (1), wobei die mindestens eine Abfrageantenne (14), die innerhalb des Ofenraums (11) positionierbar ist, und der mindestens eine passiv betriebene Temperaturfühler (15) innerhalb des Ofenraums (11) positionierbar ist, und wobei die Auswerteeinheit ausgebildet ist, die Temperatur der Beladung (2) des Ofens (1) aus der Differenz der Resonanzfrequenz des ersten Resonanzelements und der Resonanzfrequenz des zweiten Resonanzelements zu bestimmen.

3. System nach Anspruch 1 zur drahtlosen Messung der Temperatur stromführender Teile (321, 331, 341) einer Schaltanlage (3) mit mindestens einem Leistungsschalter (321), wobei die mindestens eine Abfrageeinheit (4) gegenüber elektrischen und/oder magnetischen Feldern des mindestens einen Leistungsschalters (321) abgeschirmt ist, und die mindestens eine Abfrageantenne (5) innerhalb der Schaltanlage (3) positionierbar ist, und der mindestens eine passiv betriebene Temperaturfühler (6, 7) in der Nähe mindestens eines der stromführenden Teile (321, 331, 341) positionierbar ist, wobei die Auswerteeinheit ausgebildet ist, die Temperatur mindestens eines der stromführenden Teile (321, 331, 341) aus der Differenz der Resonanzfrequenz des ersten Resonanzelements und der Resonanzfrequenz des zweiten Resonanzelements zu bestimmen.

4. System nach Anspruch 3, **dadurch gekennzeichnet, dass** der mindestens eine passiv betriebene Temperaturfühler (6, 7) derart eingerichtet ist, eines der stromführenden Teile (321, 331, 341) direkt zu kontaktieren.

5. System nach einem der vorhergehenden Ansprüche, **dadurch gekennzeichnet, dass** sich die dynamische Kapazität des ersten Resonanzelements um jeweils weniger als 10% von der dynamischen Kapazität des zweiten Resonanzelements unterscheiden.

6. System nach einem der vorhergehenden Ansprüche, **dadurch gekennzeichnet, dass** sich die dynamische Kapazität des ersten Resonanzelements um jeweils weniger als 7% von der dynamischen Kapazität des zweiten Resonanzelements unterscheiden.

7. System nach einem der vorhergehenden Ansprüche, **dadurch gekennzeichnet, dass** sich die dynamische Kapazität des ersten Resonanzelements um jeweils weniger als 4% von der dynamischen Kapazität des zweiten Resonanzelements unterscheiden.

8. System nach einem der vorhergehenden Ansprüche, **dadurch gekennzeichnet, dass** sich der dynamische Widerstand des ersten Resonanzelements vom dynamischen Widerstand des zweiten Resonanzelements unterscheidet, und/oder sich die dynamische Induktivität des ersten Resonanzelements von der die dynamische Induktivität des zweiten Resonanzelements unterscheidet, und/oder sich die dynamische Kapazität des ersten Resonanzelements von der die dynamische Kapazität des zweiten Resonanzelements unterscheidet.

9. System nach einem der vorhergehenden Ansprüche, **dadurch gekennzeichnet, dass** sich das Produkt aus der dynamischen Induktivität und der dynamischen Kapazität des ersten Resonanzelements im Temperaturbereich zwischen 0°C und 250°C um mindestens 0,05 % vom Produkt aus der dynamischen Induktivität und der dynamischen Kapazität des zweiten Resonanzelements unterscheiden.

10. System nach einem der vorhergehenden Ansprüche, **dadurch gekennzeichnet, dass** sich die Resonanzfrequenz des ersten Resonanzelements von der Resonanzfrequenz des zweiten Resonanzelements im gesamten Temperaturbereich 20°C bis 200°C unterscheidet.

11. System nach einem der vorhergehenden Ansprüche, **dadurch gekennzeichnet, dass** die Differenz der Resonanzfrequenzen der Resonanzelemente im Bereich 20°C bis 200°C stetig steigend oder stetig fallend ist.

12. System nach einem der vorhergehenden Ansprüche, **dadurch gekennzeichnet, dass** die Differenz der Resonanzfrequenzen der Resonanzelemente im Bereich 20°C bis 200°C linear steigend oder linear fallend ist.

13. System nach einem der vorhergehenden Ansprüche, **dadurch gekennzeichnet, dass** der Betrag der Ableitung der Resonanzfrequenz nach der Temperatur des ersten Resonanzelements im gesamten Bereich 20°C bis 200°C größer der Betrag der Ableitung der Resonanzfrequenz nach der Temperatur des zweiten Resonanzelements ist.

14. System nach einem der Ansprüche 1 bis 12, **dadurch gekennzeichnet, dass** der Betrag der Ableitung der Resonanzfrequenz nach der Temperatur des ersten Resonanzelements im gesamten Bereich 20°C bis 200°C kleiner der Betrag der Ableitung der Resonanzfrequenz nach der Temperatur des zweiten Resonanzelements ist.

## Claims

1. A system for wireless measuring of the temperature of an object to be measured (2, 321, 331, 341), comprising:
- at least one scanning unit (4, 13) for producing HF signals,
- at least one scanning antenna (5, 14) for sending HF signals, which can be positioned in the proximity of the measuring object (2, 321, 331, 341),
- at least one passively operated temperature probe (6, 7, 15) having a probe antenna and at least one temperature sensor formed as a resonator, wherein the probe antenna is designed to forward the HF signals to the temperature sensor, wherein the temperature probe (6, 7, 15) can be positioned in the proximity of the measuring object (2, 321, 331, 341), and
- an evaluation unit,
wherein the temperature sensor comprises at least a first resonant element and a second resonant element, wherein the resonant elements are formed as surface wave resonators or as volume wave resonators, and
wherein the evaluation unit is designed to determine the temperature of the measuring object (2, 321, 331, 341) from the difference of the resonant frequency of the first resonant element and the resonant frequency of the second resonant element, **characterized in that**
the first resonant element and the second resonant element are formed such that at 20°C the dynamic resistance, the dynamic inductance and the dynamic capacitance of the first resonant element differ, in each case, by less than 20% from the dynamic resistance, the dynamic inductance and the dynamic capacitance of the second resonant element.

2. The system according to claim 1 for wireless measuring of the temperature of the load (2) in a furnace (1), wherein the at least one scanning antenna (14) can be positioned inside the furnace chamber (11) and the at least one passively operated temperature probe (15) can be positioned inside the furnace chamber (11), and wherein the evaluation unit is designed to determine the temperature of the load (2) of the furnace (1) from the difference of the resonant frequency of the first resonant element and the resonant frequency of the second resonant element.

3. The system according to claim 1 for wireless measuring of the temperature of current-carrying parts (321, 331, 341) of a switchgear (3) having at least one circuit breaker (321), wherein the at least one scanning unit (4) is shielded with respect to electrical and/or magnetic fields of the at least one circuit breaker (321), and the at least one scanning antenna (5) can be positioned inside the switchgear (3), and the at least one passively operated temperature probe (6, 7) can be positioned in the proximity of at least one of the current-carrying parts (321, 331, 341), wherein the evaluation unit is designed to determine the temperature of at least one of the current-carrying parts (321, 331, 341) from the difference of the resonant frequency of the first resonant element and the resonant frequency of the second resonant element.

4. The system according to claim 3, **characterized in that** at least one passively operated temperature probe (6, 7) is set up to contact one of the current-carrying parts (321, 331, 341) directly.

5. The system according to any one of the preceding claims, **characterized in that** the dynamic capacitance of the first resonant element differs, in each case, by less than 10% from the dynamic capacitance of the second resonant element.

6. The system according to any one of the preceding claims, **characterized in that** the dynamic capacitance of the first resonant element differs, in each case, by less than 7% from the dynamic capacitance of the second resonant element.

7. The system according to any one of the preceding claims, **characterized in that** the dynamic capacitance of the first resonant element differs, in each case, by less than 4% from the dynamic capacitance of the second resonant element.

8. The system according to any one of the preceding claims, **characterized in that** the dynamic resistance of the first resonant element differs from the dynamic resistance of the second resonant element, and/or the dynamic inductance of the first resonant element differs from the dynamic inductance of the second resonant element, and/or the dynamic capacitance of the first resonant element differs from the dynamic capacitance of the second resonant element.

9. The system according to any one of the preceding claims, **characterized in that** the product of the dynamic inductance and the dynamic capacitance of the first resonant element, in the temperature range between 0°C and 250 °C, differs by at least 0.05% from the product of the dynamic inductance and the dynamic capacitance of the second resonant element.

10. The system according to any one of the preceding claims, **characterized in that** the resonant frequency of the first resonant element differs from the resonant frequency of the second resonant element in the entire temperature range of 20°C to 200°C.

11. The system according to any one of the preceding claims, **characterized in that** the difference of the resonant frequencies of the resonant elements steadily rises or falls in the range of 20°C to 200°C.

12. The system according to any one of the preceding claims, **characterized in that** the difference of the resonant frequencies of the resonant elements rises or falls linearly in the range of 20°C to 200°C.

13. The system according to any one of the preceding claims, **characterized in that** the sum of the derivative of the resonant frequency according to the temperature of the first resonant element over the entire range of 20°C to 200°C is greater than the sum of the derivative of the resonant frequency according to the temperature of the second resonant element.

14. The system according to any one of claims 1 to 12, **characterized in that** the sum of the derivative of the resonant frequency according to the temperature of the first resonant element over the entire range of 20°C to 200°C is less than the sum of the derivative of the resonant frequency according to the temperature of the second resonant element.

## Revendications

1. Système pour la mesure sans fil de la température d'un objet à mesurer (2, 321, 331, 341), comprenant :
- au moins une unité d'interrogation (4, 13) pour la production de signaux HF,
- au moins une antenne d'interrogation (5, 14) pour l'émission de signaux HF qui peut être positionnée à proximité de l'objet à mesurer (2, 321, 331, 341),
- au moins une sonde de température (6, 7, 15) mise en oeuvre de façon passive, avec une antenne de sonde et avec au moins un capteur de température constitué en tant que résonateur, l'antenne de sonde étant constituée pour propager les signaux HF jusqu'au capteur de température, la sonde de température (6, 7, 15) pouvant être positionnée à proximité de l'objet à mesurer (2, 321, 331, 341), et
- une unité d'analyse,
le capteur de température comprenant au moins un premier élément résonant et un deuxième élément résonant, les éléments résonants étant constitués en tant que résonateurs à ondes de surface ou en tant que résonateurs à ondes de volume, et
l'unité d'analyse étant constituée pour déterminer la température de l'objet à mesurer (2, 321, 331, 341) à partir de la différence de la fréquence de résonance du premier élément résonant et de la fréquence de résonance du deuxième élément résonant,
**caractérisé en ce que**
le premier élément résonant et le deuxième élément résonant sont constitués de telle sorte que, à 20 °C, la résistance dynamique, l'inductance dynamique et la capacité dynamique du premier élément résonant diffèrent respectivement de moins de 20 % de la résistance dynamique, de l'inductance dynamique et de la capacité dynamique du deuxième élément résonant.

2. Système selon la revendication 1 pour la mesure sans fil de la température de la charge (2) dans un four (1), l'antenne d'interrogation (14) au moins au nombre de un pouvant être positionnée à l'intérieur de la chambre du four (11), et la sonde de température (15) au moins au nombre de un mise en oeuvre de façon passive pouvant être positionnée à l'intérieur de la chambre du four (11), et l'unité d'analyse étant constituée pour déterminer la température de la charge (2) du four (1) à partir de la différence de la fréquence de résonance du premier élément résonant et de la fréquence de résonance du deuxième élément résonant.

3. Système selon la revendication 1 pour la mesure sans fil de la température de parties conduisant le courant (321, 331, 341) d'un poste de couplage (3) avec au moins un interrupteur de puissance (321), l'unité d'interrogation (4) au moins au nombre de un étant blindée vis-à-vis des champs électriques et/ou magnétiques de l'interrupteur de puissance (321) au moins au nombre de un, et l'antenne d'interrogation (5) au moins au nombre de un pouvant être positionnée à l'intérieur du poste de couplage (3), et la sonde de température (6, 7) au moins au nombre de un mise en oeuvre de façon passive pouvant être positionnée à proximité d'au moins une des parties conduisant le courant (321, 331, 341), l'unité d'analyse étant constituée pour déterminer la température d'au moins une des parties conduisant le courant (321, 331, 341) à partir de la différence de la fréquence de résonance du premier élément résonant et de la fréquence de résonance du deuxième élément résonant.

4. Système selon la revendication 3, **caractérisé en ce que** la sonde de température (6, 7) au moins au nombre de une mise en oeuvre de façon passive est agencée pour entrer directement en contact avec une des parties conduisant le courant (321, 331, 341).

5. Système selon une des revendications précédentes, **caractérisé en ce que** la capacité dynamique du premier élément résonant diffère respectivement de moins de 10 % de la capacité dynamique du deuxième élément résonant.

6. Système selon une des revendications précédentes, **caractérisé en ce que** la capacité dynamique du premier élément résonant diffère respectivement de moins de 7 % de la capacité dynamique du deuxième élément résonant.

7. Système selon une des revendications précédentes, **caractérisé en ce que** la capacité dynamique du premier élément résonant diffère respectivement de moins de 4 % de la capacité dynamique du deuxième élément résonant.

8. Système selon une des revendications précédentes, **caractérisé en ce que** la résistance dynamique du premier élément résonant diffère de la résistance dynamique du deuxième élément résonant, et/ou **en ce que** l'inductance dynamique du premier élément résonant diffère de l'inductance dynamique du deuxième élément résonant, et/ou **en ce que** la capacité dynamique du premier élément résonant diffère de la capacité dynamique du deuxième élément résonant.

9. Système selon une des revendications précédentes, **caractérisé en ce que**, dans la plage de température entre 0 °C et 250 °C, le produit de l'inductance dynamique et de la capacité dynamique du premier élément résonant diffère d'au moins 0,05 % du produit de l'inductance dynamique et de la capacité dynamique du deuxième élément résonant.

10. Système selon une des revendications précédentes, **caractérisé en ce que** la fréquence de résonance du premier élément résonant diffère de la fréquence de résonance du deuxième élément résonant dans la totalité de la plage de température de 20 °C à 200 °C.

11. Système selon une des revendications précédentes, **caractérisé en ce que** la différence des fréquences de résonance des éléments résonants dans la plage de 20 °C à 200 °C est constamment croissante ou constamment décroissante.

12. Système selon une des revendications précédentes, **caractérisé en ce que** la différence des fréquences de résonance des éléments résonants dans la plage de 20 °C à 200 °C est linéairement croissante ou linéairement décroissante.

13. Système selon une des revendications précédentes, **caractérisé en ce que** la valeur de la dérivée de la fréquence de résonance selon la température du premier élément résonant dans la totalité de la plage de 20 °C à 200 °C est supérieure à la valeur de la dérivée de la fréquence de résonance selon la température du deuxième élément résonant.

14. Système selon une des revendications 1 à 12, **caractérisé en ce que** la valeur de la dérivée de la fréquence de résonance selon la température du premier élément résonant dans la totalité de la plage de 20 °C à 200 °C est inférieure à la valeur de la dérivée de la fréquence de résonance selon la température du deuxième élément résonant.
